# FASCICULE DE BREVET EUROPEEN

(11) **EP 3 286 027 B1**
(45) Date de publication et mention de la délivrance du brevet: **22.07.2020**
(21) Numéro de dépôt: 16712066.6
(22) Date de dépôt: 18.03.2016
(51) Int. Cl.: B60J 5/04

(54) **DISPOSITIF DE GUIDAGE D'UNE VITRE SUR UN VÉHICULE AUTOMOBILE**
LEITEINRICHTUNG EINES FENSTERS AN EINEM KRAFTFAHRZEUG
GUIDANCE DEVICE FOR A WINDOW ON A AUTOMOBILE VEHICLE

(30) Priorité: 20.04.2015 FR 1553480
(43) Date de publication de la demande: 28.02.2018
(73) Titulaire: PSA AUTOMOBILES S.A., 78300 Poissy (FR)
(72) Inventeur: NESPOULOUS, Marc, 25420 Voujeaucourt (FR); BLOSSIER, Jean Emmanuel, 25200 Montbeliard (FR); OULES, Anthony, 25550 Bavans (FR)
(74) Mandataire: Fernandez, Francis Lionel
(86) Numéro de dépôt international: PCT/FR2016/050609
(87) Numéro de publication internationale: WO 2016/170240

(56) Documents cités:
- WO-A2-2015/001212
- DE-A1- 19 804 754
- FR-A1- 2 885 323
- GB-A- 2 439 659

## Description

L'invention a trait au domaine de l'automobile, et plus précisément au montage d'une vitre sur une porte latérale d'un véhicule.

Certaines portes latérales des véhicules automobiles comprennent une ouverture propre à recevoir une vitre. Cette vitre est aussi bien un élément de sécurité que de confort. En effet, la vitre permet, par exemple, à un conducteur du véhicule de contrôler des angles morts du véhicule, de protéger le conducteur et des passagers du véhicule contre la pluie ou des objets extérieurs, mais aussi, lorsque la vitre est dans une position ouverte, de refroidir un habitacle du véhicule ou d'interagir avec des éléments extérieurs.

Ces portes latérales comprennent classiquement des coulisses munies d'enjoliveurs disposés en périphérie de l'ouverture. Lors de son ouverture ou de sa fermeture, la vitre glisse entre une coque externe et une coque interne de la porte latérale, guidée par les coulisses et des guides coulisse disposés entre la coque externe et la coque interne. Le document FR2885323 divulgue une telle coulisse et un tel dispositif de guidage.

Il est connu, pour monter une vitre dans la porte latérale du véhicule automobile, de réaliser les étapes suivantes ; afin de faciliter la description, la porte et la vitre sont divisées en une première partie et une deuxième partie par un plan milieu sensiblement vertical et orthogonal à la porte :
- monter, sur la première partie de la porte en périphérie de l'ouverture, une première coulisse munie d'un premier enjoliveur ;
- monter, sur la première partie de la porte entre la coque externe et la coque interne, un premier guide coulisse placé sensiblement dans le prolongement de la première coulisse ;
- monter, sur la deuxième partie de la porte entre la coque externe et la coque interne, un deuxième guide coulisse placé de manière sensiblement symétrique au premier guide coulisse par rapport au plan milieu ;
- engager la première partie de la vitre, par le haut, dans la première coulisse et son enjoliveur ;
- faire coulisser la première partie de la vitre dans le premier guide coulisse ;
- engager la deuxième partie de la vitre dans le deuxième guide coulisse, et
- monter, sur la deuxième partie de la porte en périphérie de l'ouverture, une deuxième coulisse munie d'un deuxième enjoliveur.

Ainsi, afin de faciliter l'engagement de la deuxième partie de la vitre dans le deuxième guide coulisse, le document FR 2 885 323 décrit un guide coulisse comprenant un rail solidaire de deux parois obliques propres à guider la vitre vers le rail.

Un tel guide coulisse muni de deux parois obliques, permet de guider la vitre lors de son montage sur la porte, suivant un axe sensiblement perpendiculaire à la porte latérale. Cependant, le montage de la vitre dans la porte latérale induit des contraintes ergonomiques pour un opérateur (dimension et fragilité de la vitre) nécessitant l'attention de l'opérateur et un grand temps de montage, ainsi que des risques qualité, comme par exemple des risque de rayure d'enjoliveur.

Un premier objectif est de proposer un dispositif de guidage d'une vitre, apte à diminuer un risque de rayure des enjoliveurs des portes latérales.

Un deuxième objectif est de proposer un dispositif de guidage d'une vitre, apte à améliorer l'ergonomie pour un opérateur.

Un troisième objectif est de proposer un dispositif de guidage d'une vitre, apte à réduire le temps de montage de la vitre.

Un quatrième objectif est de proposer un dispositif de guidage d'une vitre, apte à maintenir la vitre et amortir des vibrations engendrées par un claquement de la porte latérale.

Un cinquième objectif est de proposer un véhicule automobile comprenant un dispositif de guidage répondant aux objectifs précédents.

A cet effet, il est proposé, en premier lieu, un dispositif de guidage d'une vitre mobile dans une porte latérale d'un véhicule automobile, ce dispositif de guidage comprenant un guide coulisse apte à guider la vitre suivant un axe primaire, le dispositif de guidage comprenant, en outre, un support venu de matière avec le guide coulisse, ayant un fond incliné, une paroi longitudinale externe et une paroi longitudinale interne, définissant conjointement une rainure apte, lors d'un montage de la vitre sur la porte latérale, à guider la vitre vers le guide coulisse suivant un axe tertiaire distinct de l'axe primaire.

Diverses caractéristiques supplémentaires peuvent être prévues, seules ou en combinaison :
- l'axe primaire et l'axe tertiaire sont disjoints ;
- le support comprend une paroi oblique de montage apte à guider la vitre vers l'axe tertiaire ;
- le guide coulisse comprend une paroi oblique de service apte à guider la vitre suivant un axe secondaire vers l'axe primaire ;
- l'axe primaire et l'axe secondaire sont sécants ;
- la paroi oblique de montage est en saillie de la paroi oblique de service et de la paroi longitudinale interne ;
- le guide coulisse comprend des joints souples aptes à maintenir la vitre et amortir des vibrations engendrées par un claquement de la porte latérale, lorsque la vitre est guidée par le guide coulisse ;
- une fixation transversale et une fixation longitudinale sont propres à solidariser le dispositif de guidage à la porte latérale.

Il est proposé, en deuxième lieu, un ensemble comprenant un premier dispositif de guidage solidaire d'une porte latérale et symétrique, par rapport à un plan milieu, d'un deuxième dispositif de guidage, ces deux dispositifs de guidage étant tels que précédemment décrits.

Il est proposé, en troisième lieu, un véhicule automobile équipé d'un tel ensemble.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective montrant un véhicule automobile comprenant une porte latérale, une vitre, une première coulisse, un premier enjoliveur, un premier dispositif de guidage, une deuxième coulisse, d'un deuxième enjoliveur et un deuxième dispositif de guidage de la vitre ;
- la figure 2 est une vue schématique en perspective de la porte latérale du véhicule de la figure 1 ;
- la figure 3 est une vue schématique éclatée de la coulisse et de l'enjoliveur de la figure 1 ;
- la figure 4 est une vue schématique en perspective du premier dispositif de guidage ;
- la figure 5 est une vue schématique en perspective du deuxième dispositif de guidage ;
- la figure 6 est une vue schématique en perspective d'une première étape de montage de la vitre sur la porte latérale ;
- la figure 7 est une vue schématique en perspective d'une deuxième étape de montage de la vitre sur la porte latérale ;
- la figure 8 est une vue schématique en perspective d'une troisième étape de montage de la vitre sur la porte latérale ;
- la figure 9 est une vue schématique en perspective d'une quatrième étape de montage de la vitre sur la porte latérale.

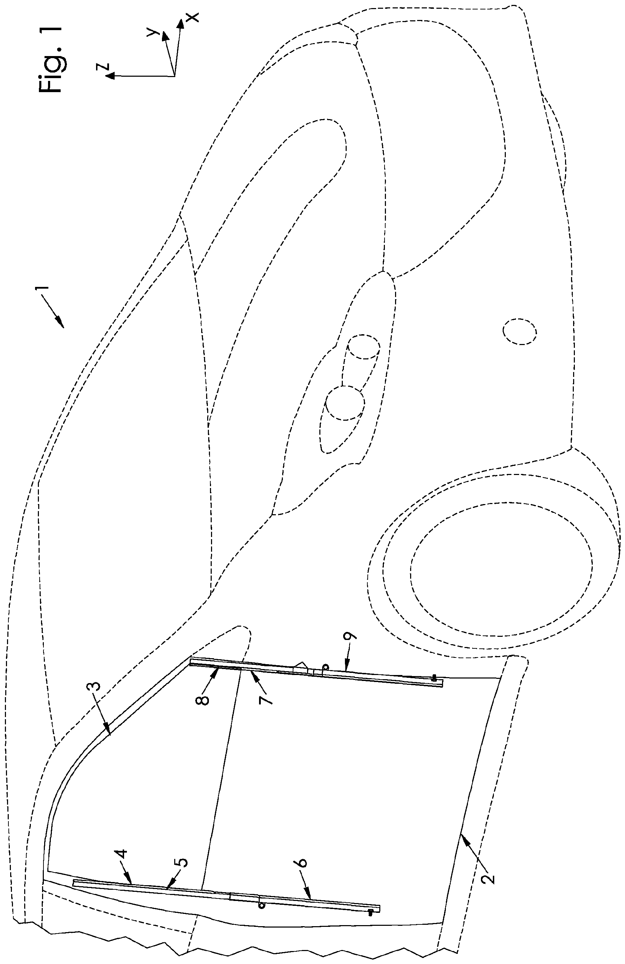

Sur la figure 1 est représenté un véhicule 1 automobile comprenant une porte 2 latérale, une vitre 3, une première coulisse 4, un premier enjoliveur 5, un premier dispositif 6 de guidage, une deuxième coulisse 7, un deuxième enjoliveur 8 et un deuxième dispositif 9 de guidage de la vitre 3.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Dans la suite de ce texte, le terme :
- incliné est employé en référence à toute pièce ou partie d'une pièce orthogonale à un plan XZ et non orthogonale au plan XY et à un plan YZ ;
- oblique est employé en référence à toute pièce ou partie d'une pièce orthogonale au plan YZ et non orthogonale au plan XY et au plan XZ.

Dans la description ci-dessous, la vitre 3, le premier dispositif 6 de guidage et le deuxième dispositif 9 de guidage sont décrits assemblés à la porte 2 latérale, elle-même assemblée au véhicule 1 automobile.

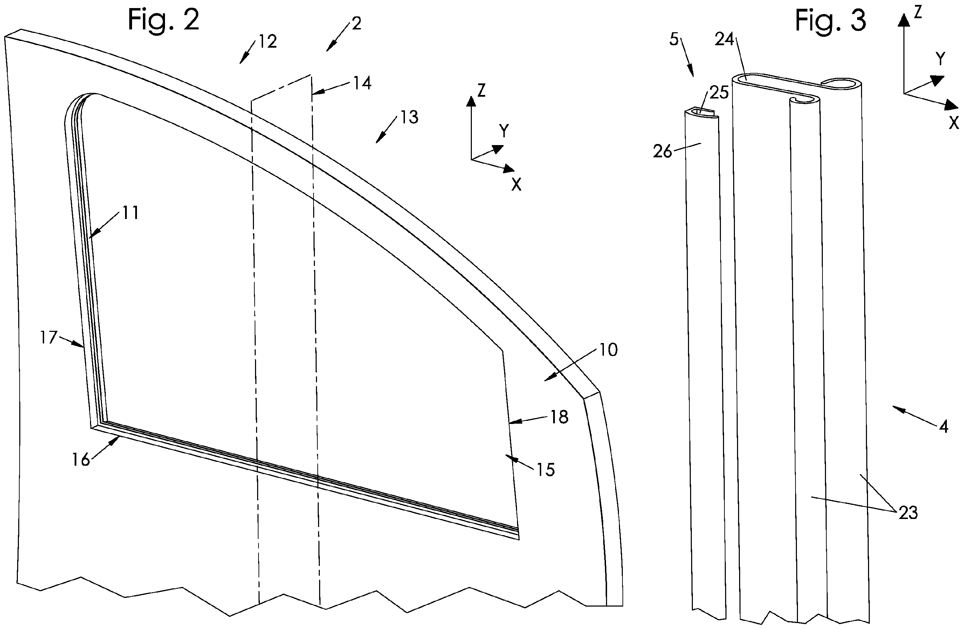

Comme représenté sur la figure 2, la porte 2 latérale comprend une coque 10 externe solidaire d'une coque 11 interne définissant une cavité. Pour des raisons de clarté, la porte 2 latérale est divisée en une première partie 12 et une deuxième partie 13, par un plan 14 milieu sensiblement parallèle au plan YZ.

La porte 2 latérale comprend également une ouverture 15 ayant une périphérie 16 dont la forme représente sensiblement un pentagone. La périphérie 16 comprend un premier pan 17 vertical et un deuxième pan 18 vertical, sensiblement parallèles et appartenant respectivement à la première partie 12 et à la deuxième partie 13 de la porte 2.

La coque 11 interne comprend un premier alésage 19 transversal et un deuxième alésage 20 transversal disposés respectivement en dessous et sensiblement décalés suivant l'axe Z du premier pan 17 vertical et du deuxième pan 18 vertical. La coque 11 interne comprend un premier alésage 21 longitudinal et un deuxième alésage 22 longitudinal disposés respectivement en dessous et sensiblement décalés suivant l'axe Z du premier alésage 19 transversal et du deuxième alésage 20 transversal.

La première coulisse 4 et le premier enjoliveur 5, illustrés sur la figure 3, ainsi que la deuxième coulisse 7 et le deuxième enjoliveur 8 sont aptes à être montés sur la coque 11 interne, respectivement, au niveau du premier pan 17 vertical ainsi que du deuxième pan 18 vertical.

La première coulisse 4 et la deuxième coulisse 7 comprennent deux bourrelets 23 verticaux définissant un rail 24 supérieur apte à être inséré entre la coque 10 externe et la coque 11 interne de la porte 2 latérale. Le premier enjoliveur 5 et le deuxième enjoliveur 8 comprennent une face 25 de maintien apte à être insérée entre la coque 10 externe et le rail 24 supérieur, et une face 26 de décoration de forme sensiblement complémentaire aux bourrelets 23 verticaux apte à cacher les bourrelets 23 verticaux.

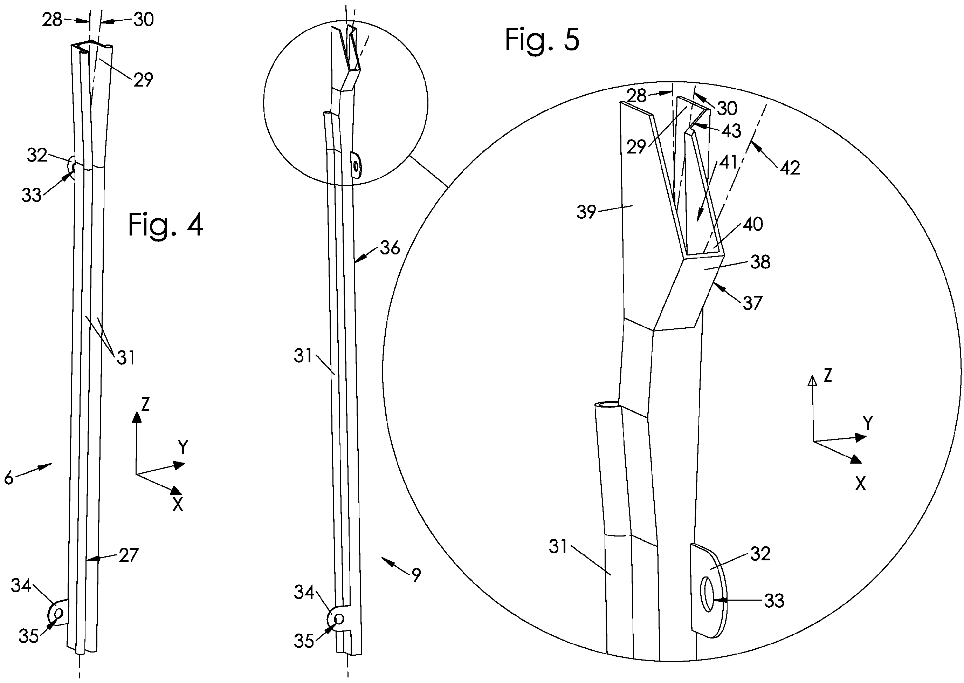

Le premier dispositif 6 de guidage, représentée sur la figure 4, et le deuxième dispositif 9 de guidage, illustré sur la figure 5, sont sensiblement symétriques par rapport au plan 14 milieu. Le premier dispositif 6 de guidage et le deuxième dispositif 9 de guidage comprennent un guide coulisse 27 muni d'un rail 28 inférieur, définissant un axe 29 primaire sensiblement parallèle au premier pan 17 vertical et au deuxième pan 18 vertical de la porte 2 latérale, dont la forme représente sensiblement un U. Le guide coulisse 27 comprend une paroi 30 oblique de service en saillie du rail 28 inférieur. La paroi 30 oblique de service définit un axe 31 secondaire sécant avec l'axe 29 primaire. Deux joints 32 souples solidaires du rail 28 inférieur et de la paroi 30 oblique de service, sont disposés de part et d'autre du rail 28 inférieur.

Le guide coulisse 27 comprend également une fixation 33 transversale munie d'un perçage 34 transversal apte à être aligné avec le premier alésage 19 transversal de la première partie 12 de la coque 11 interne. Le guide coulisse 27 comprend une fixation 35 longitudinale munie d'un perçage 36 longitudinal apte à être aligné avec le premier alésage 21 longitudinal de la première partie 12 de la coque 11 interne. Le rail 28 inférieur du guide coulisse 27 est alors dans une position sensiblement colinéaire au premier pan 17 vertical de la porte 2, dans le prolongement du rail 24 supérieur de la première coulisse 4, de telle sorte que les bourrelets 23 verticaux de la première coulisse 4 soient légèrement insérés entre le rail 28 inférieur et la paroi 30 oblique de service.

Le premier dispositif 6 de guidage et le deuxième dispositif 9 de guidage comprennent un support 37 venu de matière avec le guide coulisse 27.

Le support 37 comprend un fond 38 incliné solidaire d'une paroi 39 longitudinale externe et d'une paroi 40 longitudinale interne, en saillies du rail 28 inférieur du guide coulisse 27, définissant conjointement une rainure 41. Le fond 38 incliné défini un axe 42 tertiaire distinct, c'est-à-dire différent, de l'axe 29 primaire et de l'axe 31 secondaire. Avantageusement, l'axe 42 tertiaire est disjoint, c'est-à-dire non sécant, de l'axe 29 primaire et de l'axe 31 secondaire. Le support 37 comprend également une paroi 43 oblique de montage en saille de la paroi 30 oblique de service et de la paroi 40 longitudinale interne.

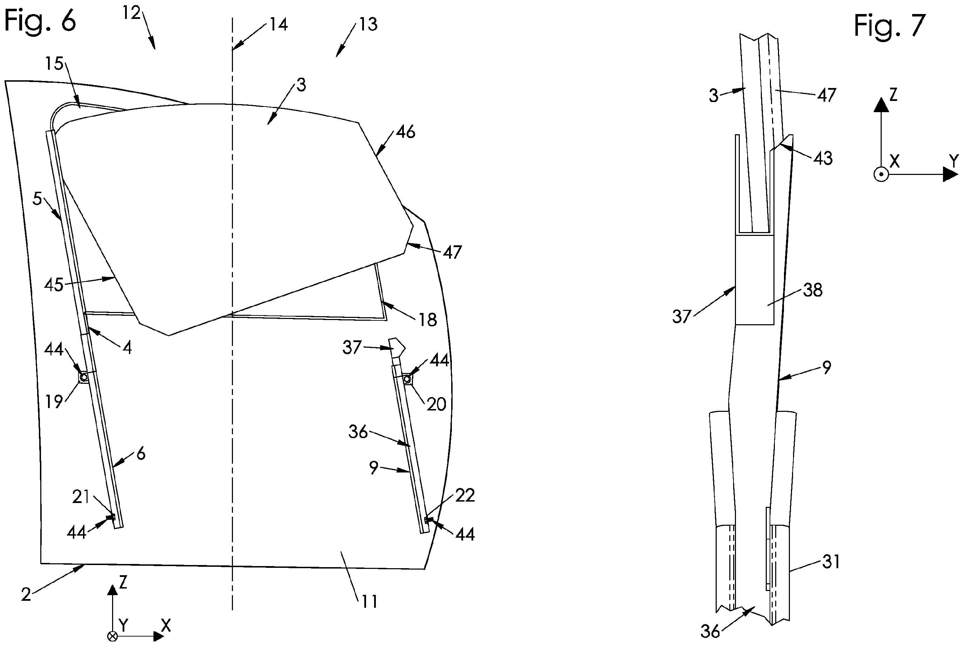

Comme représenté sur la figure 6, le montage de la vitre 3 sur la porte 2 latérale du véhicule 1 automobile est réalisé après assemblage de la première coulisse 4 et du premier enjoliveur 5 au premier pan 17 vertical de la périphérie 16 de l'ouverture 15 de la porte 2. En amont, sont également assemblés, grâce à des vis 44, le premier dispositif 6 de guidage à la première partie 12 de la porte 2 latérale et le deuxième dispositif 9 de guidage à la deuxième partie 13 de la porte 2, entre la coque 10 externe et la coque 11 interne de la porte 2 latérale.

Pour des raisons de clarté des dessins, la coque 10 externe de la porte 2 latérale n'est pas représentée sur les figures 6 à 9.

La vitre 3, de forme plane et sensiblement complémentaire à l'ouverture 15, comprend un premier côté 45 et un deuxième côté 46 sensiblement parallèles au premier pan 17 vertical et au deuxième pan 18 vertical de la porte 2 latérale. La vitre 3 comprend également un côté 47 incliné sensiblement parallèle au fond 38 incliné du premier dispositif 6 de guidage et du deuxième dispositif 9 de guidage.

Dans un premier temps, une légère rotation de la vitre 3 dans un premier sens, suivant l'axe Y et suivant l'axe Z est effectuée. La vitre 3 est introduite dans l'ouverture 15 depuis la coque 10 externe vers la coque 11 interne de la porte 2 latérale. Le premier côté 45 de la vitre 3 est engagé dans la première coulisse 4.

Dans un deuxième temps, représenté sur la figure 7, une légère rotation de la vitre 3 dans un sens inverse au premier, suivant l'axe Y et l'axe Z est effectuée. Le deuxième côté 46 de la vitre 3 est alors aligné avec le support 37 du deuxième dispositif 9 de guidage. La vitre 3 est glissée suivant l'axe 29 primaire du premier dispositif 6 de guidage, le long du rail 24 supérieur de la première coulisse 4. Le premier côté 45 de la vitre 3 entre donc en contact avec la paroi 30 oblique de service puis avec le rail 28 inférieur du premier dispositif 6 de guidage. Le côté 47 incliné de la vitre 3 entre en contact avec la paroi 43 oblique de montage du support 37 du deuxième dispositif 9 de guidage. Le côté 47 incliné glisse le long de la paroi 43 oblique de montage jusqu'à atteindre le fond 38 incliné de la rainure 41 du support 37.

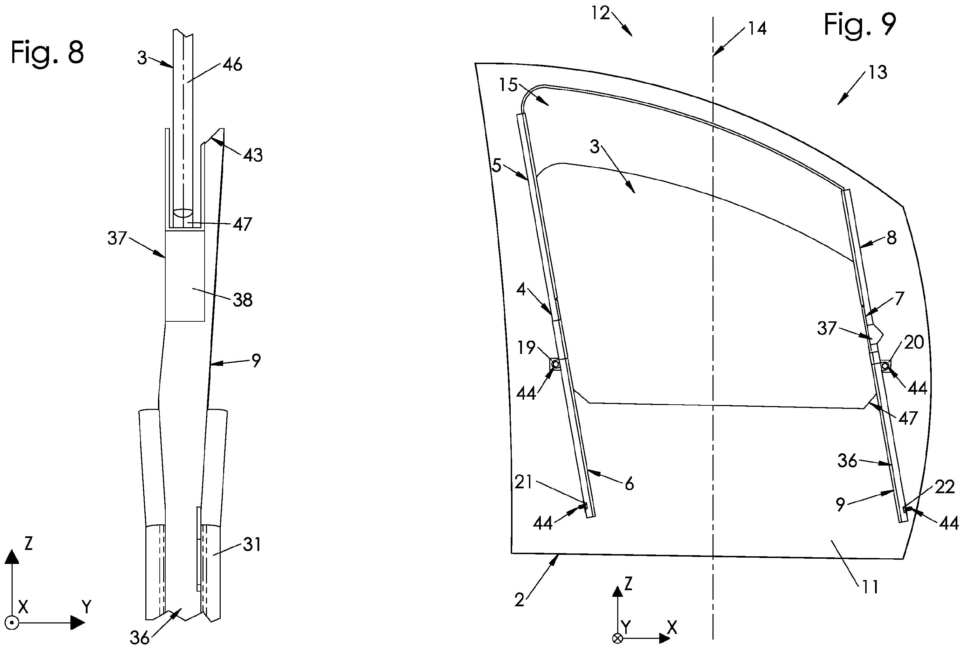

Dans un troisième temps, illustré sur la figure 8, la vitre 3 est glissée suivant l'axe 29 primaire, le long du rail 28 inférieur du premier dispositif 6 de guidage. Le côté 47 incliné de la vitre 3 glisse suivant l'axe 42 tertiaire jusqu'à ce que le deuxième côté 46 de la vitre 3 entre en contact avec la paroi 30 oblique de service puis le rail 28 inférieur du guide coulisse 27 du deuxième dispositif 9 de guidage.

Dans un dernier temps, représenté sur la figure 9, la deuxième coulisse 7 et le deuxième enjoliveur 8 sont assemblés au deuxième pan 18 vertical de la périphérie 16 de l'ouverture 15 de la porte 2. La vitre 3 est montée sur la porte 2 latérale du véhicule 1 et peut glisser suivant l'axe 29 primaire, le long du rail 24 supérieur de la première coulisse 4 et de la deuxième coulisse 7 ainsi que le long du rail 28 inférieur du guide coulisse 27 appartenant au premier dispositif 6 de guidage et au deuxième dispositif 9 de guidage.

Selon un deuxième mode de réalisation, le support 37 et le guide coulisse 27 du premier dispositif 6 de guidage et du deuxième dispositif 9 de guidage peuvent être mobiles l'un par rapport à l'autre.

Selon un troisième mode de réalisation, le support 37 et le guide coulisse 27 du premier dispositif 6 de guidage et du deuxième dispositif 9 de guidage peuvent être désolidarisés.

Le support 37 du deuxième dispositif 9 de guidage de la vitre 3 guide la vitre 3 suivant la paroi 43 oblique de montage et le fond 38 incliné, lors du montage de la vitre 3 sur la porte 2 latérale. Le montage de la vitre 3 par un opérateur est donc rapide, simple et demande peu d'attention à l'opérateur.

Ce montage simple, ne demandant que peu d'attention, permet à l'opérateur de ne plus adopter des positions de travail contraignantes.

Le support 37, permettant une plus grande inclinaison de la vitre 3 lors de son montage, allié au peu d'attention demandé, permettent une diminution du risque de rayure des enjoliveurs par l'opérateur.

Les joints 32 souples du guide coulisse 27 du premier dispositif 6 de guidage et du deuxième dispositif 9 de guidage sont aptes à maintenir la vitre 3 et amortir des vibrations engendrées par un claquement de la porte 2 latérale lorsque la vitre 3 est guidée par le premier dispositif 6 de guidage et le deuxième dispositif 9 de guidage.

## Revendications

1. Dispositif (9) de guidage d'une vitre (3) mobile dans une porte (2) latérale d'un véhicule (1) automobile, ce dispositif (9) de guidage comprenant un guide coulisse (27) apte à guider la vitre (3) suivant un axe (29) primaire, le dispositif (9) de guidage étant **caractérisé en ce qu'**il comprend un support (37) venu de matière avec le guide coulisse (27), ayant un fond (38) incliné, une paroi (39) longitudinale externe et une paroi (40) longitudinale interne, définissant conjointement une rainure (41) apte, lors d'un montage de la vitre (3) sur la porte (2) latérale, à guider la vitre (3) vers le guide coulisse (27) suivant un axe (42) tertiaire distinct de l'axe (29) primaire.

2. Dispositif (9) de guidage selon la revendication 1, **caractérisé en ce que** l'axe (29) primaire et l'axe (42) tertiaire sont disjoints.

3. Dispositif (9) de guidage selon l'une quelconque des revendications précédentes, **caractérisé en ce que** le support (37) comprend une paroi (43) oblique de montage apte à guider la vitre (3) vers l'axe (42) tertiaire.

4. Dispositif (9) de guidage selon la revendication précédente, **caractérisé en ce que** le guide coulisse (27) comprend une paroi (30) oblique de service apte à guider la vitre (3) suivant un axe (31) secondaire vers l'axe (29) primaire.

5. Dispositif (9) de guidage selon la revendication précédente, **caractérisé en ce que** l'axe (29) primaire et l'axe (31) secondaire sont sécants.

6. Dispositif (9) de guidage selon l'une quelconque des revendications 4 ou 5, **caractérisé en ce que** la paroi (43) oblique de montage est en saillie de la paroi (30) oblique de service et de la paroi (40) longitudinale interne.

7. Dispositif (9) de guidage selon l'une quelconque des revendications précédentes, **caractérisé en ce que** le guide coulisse (27) comprend des joints (32) souples apte à maintenir la vitre (3) et amortir des vibrations engendrées par un claquement de la porte (2) latérale lorsque la vitre (3) est guidée par le guide coulisse (27).

8. Dispositif (9) de guidage selon l'une quelconque des revendications précédentes, **caractérisé en ce qu'**il comprend une fixation (33) transversale et une fixation (35) longitudinale propres à solidariser le dispositif (9) de guidage à la porte (2) latérale.

9. Ensemble comprenant un premier dispositif (6) de guidage et un deuxième dispositif (9) de guidage selon l'une quelconque des revendications précédentes, la premier dispositif (6) de guidage étant solidaire d'une porte (2) latérale et symétrique, par rapport à un plan (14) milieu, du deuxième dispositif de guidage (9).

10. Véhicule (1) automobile équipé d'un ensemble selon la revendication précédente.

## Patentansprüche

1. Leiteinrichtung (9) zur Führung eines beweglichen Fensters (3) in einer Seitentür (2) eines Kraftfahrzeugs (1), wobei diese Führungsvorrichtung (9) eine Gleitführung (27) umfasst, die in der Lage ist, das Fenster (3) entlang einer Hauptachse (29) zu führen, wobei die Führungsvorrichtung (9) **dadurch gekennzeichnet ist, dass** sie einen Träger (37) umfasst, der fest mit der Gleitführung (27) verbunden ist, mit einem geneigten Boden (38), einer äußeren Längswand (39) und einer inneren Längswand (40), die gemeinsam eine Nut (41) definieren, die, wenn das Fenster (3) an der Seitentür (2) montiert ist, in der Lage ist, das Fenster (3) zur Gleitführung (27) entlang einer von der Hauptachse (29) verschiedenen Tertiärachse (42) zu führen.

2. Führungsvorrichtung (9) nach Anspruch 1, **dadurch gekennzeichnet, dass** die Primärachse (29) und die Tertiärachse (42) unzusammenhängend sind.

3. Führungsvorrichtung (9) nach einem der vorstehenden Ansprüche, **dadurch gekennzeichnet, dass** der Träger (37) eine schräge Montagewand (43) aufweist, die in der Lage ist, die Scheibe (3) in Richtung der Tertiärachse (42) zu führen.

4. Führungsvorrichtung (9) nach dem vorhergehenden Anspruch, **dadurch gekennzeichnet, dass** die Gleitführung (27) eine schräge Bedienungswand (30) umfasst, die geeignet ist, die Scheibe (3) entlang einer sekundären Achse (31) zur primären Achse (29) zu führen.

5. Führungsvorrichtung (9) nach dem vorhergehenden Anspruch, **dadurch gekennzeichnet, dass** die primäre Achse (29) und die sekundäre Achse (31) sekantierend sind.

6. Führungsvorrichtung (9) nach einem der Ansprüche 4 oder 5, **dadurch gekennzeichnet, dass** die schräge Montagewand (43) von der schrägen Bedienungswand (30) und von der inneren Längswand (40) vorsteht.

7. Führungsvorrichtung (9) nach einem der vorstehenden Ansprüche, **dadurch gekennzeichnet, dass** die Gleitführung (27) flexible Dichtungen (32) umfasst, die in der Lage sind, das Fenster (3) zu halten und Schwingungen zu dämpfen, die durch ein Zuschlagen der Seitentür (2) erzeugt werden, wenn das Fenster (3) durch die Gleitführung (27) geführt wird.

8. Führungsvorrichtung (9) nach einem der vorstehenden Ansprüche, **dadurch gekennzeichnet, dass** sie eine Querbefestigung (33) und eine Längsbefestigung (35) umfasst, die geeignet sind, die Führungsvorrichtung (9) an der Seitentür (2) zu befestigen.

9. Baugruppe mit einer ersten Führungsvorrichtung (6) und einer zweiten Führungsvorrichtung (9) nach einem der vorstehenden Ansprüche, wobei die erste Führungsvorrichtung (6) fest mit einer Seitentür (2) verbunden und symmetrisch in Bezug auf eine Mittelebene (14) mit der zweiten Führungsvorrichtung (9) ist.

10. Kraftfahrzeug (1), das mit einer Baugruppe gemäß dem vorstehenden Anspruch ausgestattet ist.

## Claims

1. Guidance device (9) for guiding a movable window (3) in a side door (2) of a motor vehicle (1), this guide device (9) comprising a sliding guide (27) capable of guiding the window (3) along a primary axis (29), the guide device (9) being **characterised in that** it comprises a support (37) integral with the sliding guide (27), having an inclined bottom (38), an outer longitudinal wall (39) and an inner longitudinal wall (40), jointly defining a groove (41) capable, when the window (3) is mounted on the side door (2), of guiding the window (3) towards the sliding guide (27) along a tertiary axis (42) distinct from the primary axis (29).

2. Guidance device (9) according to claim 1, **characterized in that** the primary axis (29) and the tertiary axis (42) are disjointed.

3. Guiding device (9) according to any one of the preceding claims, **characterized in that** the support (37) comprises an oblique mounting wall (43) capable of guiding the pane (3) towards the tertiary axis (42).

4. Guidance device (9) according to the preceding claim, **characterized in that** the sliding guide (27) comprises an oblique service wall (30) capable of guiding the pane (3) along a secondary axis (31) towards the primary axis (29).

5. Guidance device (9) according to the preceding claim, **characterized in that** the primary axis (29) and the secondary axis (31) are secant.

6. Guidance device (9) according to any one of claims 4 or 5, **characterised in that** the oblique mounting wall (43) projects from the oblique service wall (30) and from the inner longitudinal wall (40).

7. Guidance device (9) according to any one of the preceding claims, **characterised in that** the sliding guide (27) comprises flexible seals (32) capable of holding the window (3) and damping vibrations generated by a slam of the side door (2) when the window (3) is guided by the sliding guide (27).

8. Guidance device (9) according to any one of the preceding claims, **characterized in that** it comprises a transverse fixing (33) and a longitudinal fixing (35) capable of securing the guidance device (9) to the side door (2).

9. Assembly comprising a first guidance device (6) and a second guidance device (9) according to any one of the preceding claims, the first guidance device (6) being integral with a side door (2) and symmetrical, with respect to a middle plane (14), with the second guidance device (9).

10. Motor vehicle (1) equipped with an assembly according to the preceding claim.
